# EUROPEAN PATENT APPLICATION

(11) **EP 4 311 593 A1**
(43) Date of publication of application: **31.01.2024**
(21) Application number: 22186803.7
(22) Date of filing: 25.07.2022
(51) Int. Cl.: B01D 46/24

(54) **FILTER ELEMENTS AND ASSEMBLIES**

(71) Applicant: Donaldson Company, Inc., Bloomington, MN 55431 (US)
(72) Inventor: CATOOR, Bart, Minneapolis, 55440-1299 (US); VERSTRAETE, Mathijs, Minneapolis, 55440-1299 (US); DECOSTER, Kristof, Minneapolis, 55440-1299 (US)
(74) Representative: IPLodge bv

(57) **Abstract**

A filter cartridge comprising:
a) a filtration media arrangement (or media pack) extending along a longitudinal axis between a first end and a second end and defining an internal volume of the filter cartridge; and
b) a first end cap arranged at the first end of the filtration media and further delimiting the internal volume, wherein the first end cap comprises a deformable portion and a displaceable portion surrounded by the deformable portion, wherein the end cap is adapted for allowing a displacement of the displaceable portion along the longitudinal axis between at least a first axial position and a second axial position by a deformation of the deformable portion;
wherein the displaceable portion comprises an inner and an outer surface and a first member of a projection-receiver arrangement arranged on the inner surface;
and associated filter assembly.

## Description

### Technical field

The present disclosure relates to fluid filter cartridges or elements and associated filter assemblies, such as for instance air filter elements.

### Background art

Air cleaners are used to filter combustion intake air for internal combustion engines of a variety of vehicles and other equipment, such as: trucks; buses; off-road construction equipment; agriculture equipment; generator sets; etc. Such air cleaners typically include a housing with a removable and replaceable main filter cartridge positioned therein. The housing typically includes a service access cover, for selected access to an internally received filter cartridge, for servicing.

Some issues relating to air cleaner arrangements with a serviceable filter cartridge include for instance: ensuring proper installation and sealing; obtaining appropriate support for the filter cartridge within the air cleaner; ensuring that the air cleaner housing is protected against improper installation of filter cartridge; ensuring that the air cleaner housing is protected against installation of an improper filter cartridge; providing for convenient installation and removal; being robust and compact.

A filter cartridge typically comprises a seal suitable for sealing against an inner surface of the housing when installed, thereby defining a clean and a dirty air portion of the internal volume of the filter housing.

In some prior art air cleaner assemblies, the filter cartridge should be inhibited from rotating about its longitudinal axis when installed, in order not to come loose and/or break the sealing connection of the seal.

In WO2009014988A1 an air cleaner has been disclosed comprising a central support structure or tower for supporting a filter cartridge in a filter housing. A distal end surface of the support structure comprises a serpentine wall. An end cap of an associated filter element comprises a complimentary serpentine wall structure. When the filter cartridge is supported by the support structure, the interaction between the respective serpentine structure causes a rotational fixation of the filter cartridge with respect to the support structure and filter housing.

Improvements are desirable.

### Summary of the disclosure

It is an objective of the present disclosure to provide a filter cartridge according to claim 1 and an associated filter assembly.

In a first aspect of the present disclosure, a filter cartridge is disclosed, preferably for use with an air cleaner assembly, the filter cartridge comprising:
a) a filtration media arrangement (or media pack) extending along a longitudinal axis between a first end and a second end and defining an internal volume of the filter cartridge; and
b) a first end cap arranged at the first end of the filtration media and further delimiting the internal volume, wherein the first end cap comprises a deformable portion and a displaceable portion surrounded by the deformable portion, wherein the end cap is adapted for allowing a displacement of the displaceable portion along the longitudinal axis between at least a first axial position and a second axial position by a deformation of the deformable portion;
   wherein the displaceable portion comprises an inner and an outer surface and a first member of a projection-receiver arrangement arranged on the inner surface.

It is an advantage of the disclosed filter cartridge that the filter cartridge is locked against rotation within the housing around its longitudinal axis, after insertion of the filter cartridge into the housing. This inhibits a possible release of the filter cartridge, and for instance a sealing element of the filter cartridge, in the housing from its proper position in use, for instance when exposed to vibrations. This is specifically interesting when the filter cartridge is locked to the housing at its second end by means of a locking mechanism based on rotation of the filter cartridge around its longitudinal axis.

It also provides the advantage that less material may be needed for a housing of a filter assembly comprising the disclosed filter element, especially a tower or central element support structure can have a reduced length when compared to certain state of the art solutions wherein the tower necessarily needs to extend up until the (inner surface) of a non-deformable first end cap of the filter element in order to provide support and/or rotation locking.

It also provides the advantage that the filter element can have a relatively larger inner volume or relatively larger inner length when not installed properly. In case that the first end cap cooperates with a cover of a suitable, predetermined housing, aspects of which are described further on, the housing cover will not be able to close. It thus provides the advantage that the rotation lock cannot be forgotten by a person performing maintenance, for an appropriate housing.

The use of the disclosed filter cartridge in a filter assembly also provides the advantage that a standard, wrong filter elements will not be able to make use of the rotation lock mechanism, hinting the user to replace the filter cartridge by a correct filter cartridge.

According to preferred embodiments, the deformable portion is adapted to allow a displacement of the displaceable portion of more than 0.5 cm, more than 1, 2, 3, 4, 5 cm, preferably more than 6, 7, 8, 9, or 10 cm, or more than 15 or more than 20 cm.

According to preferred embodiments, the deformable portion is adapted to allow a displacement of the displaceable portion of less than 25 cm, or less than 20 cm, or less than 15 cm, or less than 10 cm.

According to preferred embodiments, the deformable portion is adapted to allow a displacement of the displaceable portion of more than 2.5% or more than 5% or more than 10% or more than 15% or more than 20% of the filter cartridge length, or of the filtration media arrangement or filter media length, along the axis of the filter cartridge or filtration media arrangement respectively.

According to preferred embodiments, the deformable portion is adapted to allow a displacement of the displaceable portion of less than 20%, or less than 15%, or less than 10% of the filter cartridge length, or of the filtration media arrangement or filter media length, along the axis of the filter cartridge or filtration media arrangement respectively.

Limiting the absolute or relative displacement of the displaceable portion can be advantageous for reducing restriction of the airflow through the filter element.

According to preferred embodiments, the deformation of the deformable portion corresponding to the displacement of the displaceable portion is such that for any position in between the first and second position, a positive (towards second position) or negative (towards first position) bias exists in the deformable portion. In other words, for any position in between the first and second position, the deformable portion would automatically deform without external influencing forces. In still other words, the deformable portion is in a stable position in both first and second position, and in an instable position for any position in between the first and the second position. According to preferred embodiments, the bias direction of the deformable portion is constant. According to alternative preferred embodiments the bias direction of the deformable portion changes at an intermediate position in between the first and second positions of the displaceable portion.

According to preferred embodiments, the deformable portion is partially or completely stretchable.

In preferred embodiments, the first end cap is a closed endcap. Alternatively, the first end cap comprises at least one opening and is therefore an open end cap.

In preferred embodiments, the filter cartridge comprises a second end cap at the second end of the filter cartridge. Preferably, the second end cap is closed. Alternatively, the second end cap can be open. According to preferred embodiments, one of the first and second end caps is open, and the other one is open.

According to preferred embodiments, the open end cap, preferably the second end cap, comprises a seal or sealing element, which can be suitable for axial or radial sealing. For instance, it can comprise a polyurethane (PU) seal or a Thermoplastic Elastomer (TPE) seal arranged and adapted for sealing the inlet or outlet opening of the filter element against the filter housing. According to preferred embodiments, the second end cap comprises a means for locking the filter element with respect to the housing, e.g. with respect to a housing outlet, the locking means being suitable for locking by means of a rotational movement along a longitudinal axis of the filter cartridge.

According to preferred embodiments, the projection-receiver arrangement is of a type that blocks a relative rotational movement between projection and receiver. Preferably, the first member comprises a protruding structure. Alternatively, the first member comprises a recessed structure. According to preferred embodiments, the first member comprises or consists of a fin, rib or other key structure or a recess for receiving such a respective fin, rib or other key structure. For instance, the first member may comprise an N-fold rotational symmetric structure around a longitudinal axis; such as for instance a structure having a cross-section being regular star, cross, gear, regular polygon (e.g. hexagon) or flower shape; or a recess adapted for receiving such a structure. N can then for instance define the amount of angular positions in which the filter element can be installed in a corresponding housing.

According to preferred embodiments, the first member may comprise different cross-sections perpendicular on the longitudinal axis, for different axial positions. For instance, at a first axial height (over a first axial portion; e.g. towards the inner surface of the displaceable portion of the end cap) of the first member, the cross-section may be one of the above, for instance regular polygon (E.g. hexagon), while at another axial height of the first member (over a second axial portion; e.g. towards the outer portion of displaceable portion), the cross-section may be circular.

According to preferred embodiments, the filter media arrangement or media pack comprises pleated media which is arranged in a tubular manner, preferably defining a cylindrical or conical sidewall.

According to preferred embodiments, the filtration media defines a plane at or adjacent to the first end of the filtration media, and the displaceable portion (or for instance its outer surface) lies in the plane or is distant from the plane (for instance with a distance smaller than 5 cm, or smaller than 3 cm, or smaller than 1 cm) on the side opposite to the side comprising the filtration media, when the displaceable portion is in the first axial position.

According to preferred embodiments, the filtration media defines a plane at or adjacent to the first end of the filtration media, and the displaceable portion (or for instance its outer surface) lies in the plane or is distant from the plane on the side of the filtration media, when the displaceable portion is in the second axial position.

According to preferred embodiments, the filtration media defines a plane at or adjacent to the first end of the filtration media, and the displaceable portion (or for instance its outer surface) is distant from the plane on the side opposite to the side comprising the filtration media, when the displaceable portion is in the second axial position.

According to preferred embodiments,
a. the filtration media defines a plane at or adjacent to the first end of the filtration media, and the displaceable portion lies in the plane or is distant from the plane on the side of the filtration media, when the displaceable portion is in the first axial position; and
b. the displaceable portion is distant from the plane on the side of the filtration media, when the displaceable portion is in the second axial position, the second axial position being more distant from the plane than the first axial position.

According to preferred embodiments, the deformable portion comprises one or more folding lines or portions with reduced thickness to allow folding of the deformable portion in a predetermined manner. The predetermined manner can for instance be predetermined such as to maximise the axial displacement of the displaceable portion, or such as to have a predetermined axial displacement of the displaceable portion between the first and the second position.

According to preferred embodiments, the deformable portion comprises two or more, preferably concentric, folding lines or hinge portions connected by one or more rigid (ring or annular) portion(s), by one or more flexible (e.g. ring or annular) portion(s), by one or more stretchable (e.g. ring or annular) portion(s), or by a combination of one or more rigid (ring or annular) portion(s) with one or more flexible (e.g. ring or annular) portion(s) and/or one or more stretchable (e.g. ring or annular) portion(s), for instance in a radially alternating manner. It may be advantageous to include one or more flexible or stretchable (e.g., ring or annular) portions to facilitate the movement of the displaceable portion between a first and a second position. It may be advantageous to provide a deformable portion which provides a tactile or haptic feedback to the user when the displaceable portion reaches the second position. The haptic or tactile feedback may be a result from an interaction with a support structure of a housing as described below for the second aspect of the present disclosure, such as a tower or supporting safety filter cartridge.

According to preferred embodiments, at least one folding line or hinge portion is adjacent or directly adjacent to the filtration media, i.e., adjacent or directly adjacent in axial projection to the axial projection of the inner surface of the filtration media arrangement or media pack.

This provides the advantage that the axial distance of displacement of the displaceable portion is maximalised.

According to preferred embodiments, the deformable portion is adapted for deforming only above a predetermined axial threshold force or pressure. This predetermined axial threshold force or pressure is preferably higher than a force or pressure exerted by a differential pressure over the filter cartridge induced by a predetermined dust loading of the filtration media, the predetermined dust loading corresponding to a loading that would require filter replacement in order not to substantially jeopardise system performance by the filter cartridge.

According to preferred embodiments, the displaceable portion comprises a gripping portion on its outer surface, allowing the exertion of an axial pulling force by at least one human adult finger.

It is an advantage that this feature would facilitate the manipulation of the displaceable portion between the first and second axial positions.

In a second aspect of the present disclosure, a filter assembly is disclosed comprising:
a. a main filter housing comprising a filter replacement opening and an internal volume for receiving a filter cartridge according to any of the embodiments of the first aspect;
b. a filter cartridge according to any of the embodiments of the first aspect arranged operatively into the main filter housing;
c. a cover for closing off the filter replacement opening of the main filter housing;
d. a, preferably centrally arranged, support structure for supporting the filter cartridge arranged in the main filter housing.

According to preferred embodiments, the support structure comprises a tower construction or arrangement, a first end of which can for instance be arranged around an inlet or outlet of the filter housing. The tower construction comprises a distal end, remote and at a position opposed to the first end.

According to further or alternative preferred embodiments, the support structure comprises a smaller second filter cartridge, the second filter cartridge itself being supported in the main filter housing by a support structure, such as for instance a tower construction or arrangement.

According to preferred embodiments, the filter cartridge is a main filter element and the smaller second filter cartridge is a safety filter element.

According to preferred embodiments, the support structure comprises a second member of the projection-receiver arrangement at an axial end thereof which is arranged within the internal volume of the filter cartridge, and wherein the projection-receiver arrangement is engaged when the displaceable portion in the second axial position and disengaged in the first axial position. Preferably, the second member comprises a recessed structure.

Alternatively, the second member comprises a protruding structure. According to preferred embodiments, the second member comprises or consists of a fin, rib or other key structure or a recess for receiving such a respective fin, rib or other key structure. For instance, the second member may comprise an N-fold rotational symmetric structure around a longitudinal axis; such as for instance a structure having a cross-section being regular star, cross, gear, regular polygon (e.g. hexagon) or flower shape; or a recess adapted for receiving such a structure. N can then for instance define the amount of angular positions in which the filter element can be installed in a corresponding housing.

According to preferred embodiments, second member and the first member are complementary. According to preferred embodiments, the respective cross-sections perpendicular on the longitudinal direction of the second member and the first member are complementary.

According to preferred embodiments, the cover comprises a, preferably centrally arranged, inwardly protruding portion, arranged adjacent to the outer surface of the displaceable portion, to lock it into the second position, thus securing the projection-receiver arrangement.

According to preferred embodiments, an axial length of the filtration media arrangement is larger than an axial length of the support structure.

According to preferred embodiments, an axial distance between the first axial position of the displaceable element and the second end of the filtration media arrangement is larger than an axial length of the central support structure.

Features and advantages disclosed for one of the above aspects of the present disclosure are hereby also implicitly disclosed for the other aspects, mutatis mutandis, as the skilled person will recognize.

### Brief description of the drawings

The disclosure will be further elucidated by means of the following description and the appended figures.
Fig. 1 and Fig. 2 are partial perspective views of a first embodiment of the present disclosure. Figures 3(a) and (b) further illustrate additional features of the first embodiment of the present disclosure. Figure 3(c) illustrates further details on filter housing and filter assembly.
Fig. 4(a) and (b) illustrate a second embodiment of the present disclosure.
Fig. 5(a) and (b) illustrate a third embodiment of the present disclosure.
Fig. 6 illustrates an alternative arrangement applicable to any of the first to third embodiments of the present disclosure.
Figures 7, 8, 9(a) and (b), 10(a) and (b), 11, 12, 13 and 14 illustrate examples of configurations of the deformable portion, which can be applied to any of the embodiments of the present disclosure.
Figure 15 illustrates a further preferred embodiment of the present disclosure.

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

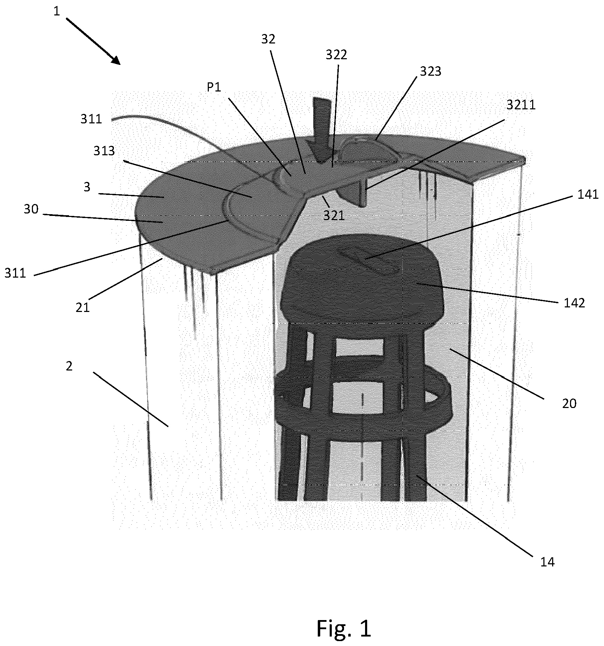

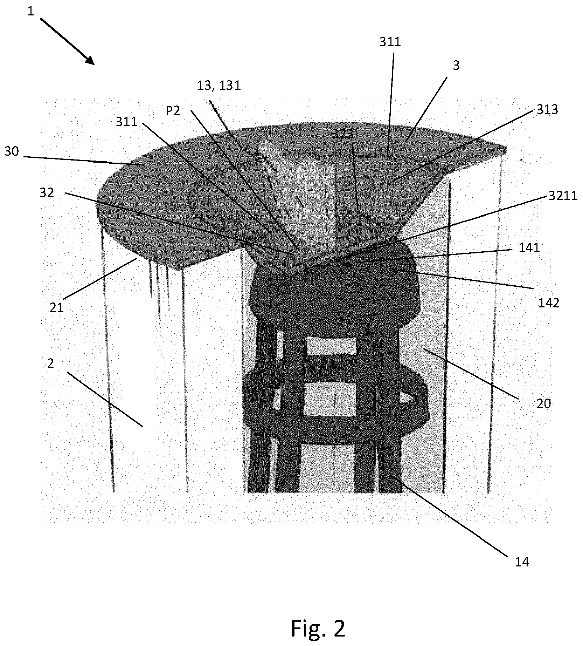

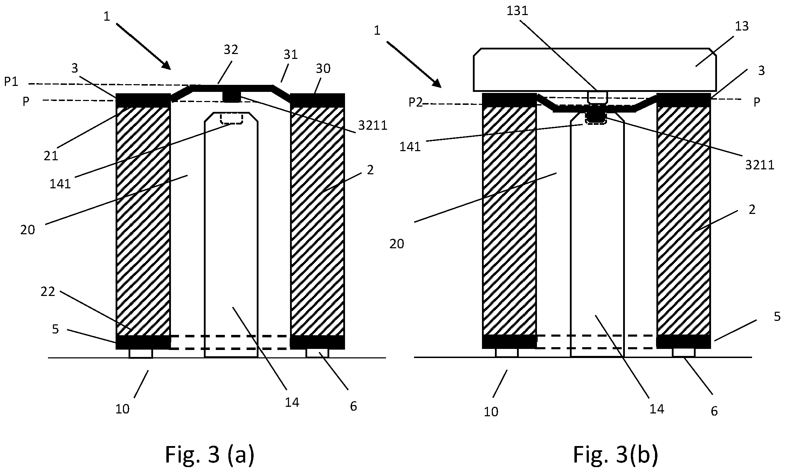

Fig. 1 and Fig. 2 are partial perspective views of a first embodiment of the present disclosure. Figures 3(a) and (b) further illustrate additional features of the first embodiment of the present disclosure.

A filter cartridge 1 comprises a filtration media arrangement 2 of the pleated filter type, which is arranged in a tubular configuration, and which extends along a longitudinal axis between a first end 21 and a second end 22 and defines an internal volume 20 of the filter cartridge 1. The pleated filter pack comprises for instance pleats of constant pleat height, such that both radially inner and outer surfaces of the media arrangement 2 have a cylindrical envelope, the respective cylindrical envelopes being arranged concentrically, i.e. along a common axis.

A first end cap 3, typically of a plastic material, is arranged at or on the first axial end 21 of the filtration media 2, which further delimits the internal volume 20. The end cap is bound to the first end 21 in a sealing manner. For instance, the end cap 3 can be bound by plastic injection of the endcap onto the filtration media arrangement or media pack 2, or it can be bonded by direct bonding, or by gluing or using a potting material. The first end cap is a closed end cap, in the sense that it does not comprise a feedthrough opening for fluids, preferably air.

The first end cap 3 comprises a centrally positioned displaceable portion 32 and a deformable portion 31 surrounding the displaceable portion 32. The end cap 3 is adapted for allowing a displacement of the displaceable portion 32 along the longitudinal axis between at least a first axial position (P1; Fig. 1) and a second axial position (P2; Fig. 2) by a deformation of the deformable portion 31. The filtration media 2 defines a plane P at or adjacent to the first end 21 of the filtration media 2. The displaceable portion 32 is distant from plane P on the side opposite to the side comprising the filtration media 2, when the displaceable portion 32 is in the first axial position P1. The displaceable portion 32 is distant from plane P on the side of the filtration media 2, when the displaceable portion 32 is in the second axial position P2.

The centrally positioned displaceable portion 32 is disc shaped and comprises a circular circumference. The deformable portion 31 is an annular portion 313 comprising a circular, radially inner side and a circular radially outer side. On the radially inner side it forms a connection/is connected with the circumference of the displaceable portion 32. On the radially outer side, it is connected with a fixed annular portion 30 (the portion of the end cap 3 that is attached to the first axial end of the filtration media arrangement or media 2) of the end cap 3, adjacent or directly adjacent to the inner filtration media, i.e., proximate in axial projection (for instance within a radial distance of 5mm, or 3 mm or 1 mm) to the axial projection of the inner surface of the filtration media arrangement.

Here, the end cap can have a constant thickness, but generally, different portions can have different thicknesses. E.g., the displaceable portion can have a first thickness, and the deformable portion can have a second, different thickness. The second thickness can for instance be smaller than the first thickness. The deformable portion 31 further comprises one or more folding lines 311 or portions with reduced thickness 311 to allow folding of the deformable portion 31 in a predetermined manner. These folding lines 311 or portions with reduced thickness 311 can also be referred to as hinge portions 311 and are arranged concentrically in the first end cap 3, preferably in a symmetric manner around the longitudinal axis of the filter element 1.

Here, the deformable portion comprises two concentric hinge portions 311 connected by a single rigid, but alternatively also flexible, ring portion 313.

The deformable portion is adapted for deforming only at a predetermined axial threshold force or pressure which is higher than a force or pressure exerted by a differential pressure induced by a predetermined dust loading of the filtration media of the filtration media arrangement 2. The displaceable portion 32 should preferably not be able to move between the first and second positions (P1, P2) during use, due to pressures building up over the filter element 1.

The displaceable portion 32 comprises an inner surface 321 and an outer surface 322 and a first member 3211 of a projection-receiver arrangement arranged on the inner surface 322, which is embodied here as a fin or rib 3211 having elongate shape.

The first member 3211 of a projection-receiver arrangement is received by a corresponding second member 141 of the projection-receiver arrangement, arranged on a central support structure 14 for supporting the filter cartridge arranged in the main filter housing 10 (see Fig. 3(a) (b)). Here, the support structure is a tower construction having a first end which is arranged around an inlet or outlet of the filter housing 10. The tower construction 14 comprises a distal end, remote and at a position opposed to the first end, which comprises an end surface 142. The end surface comprises a slot 141 for receiving the fin or rib 3211 and locking the rotational degree of freedom of a filter element around its longitudinal axis.

The filter cartridge 1 further comprises a second end cap 5 arranged on or at the second end of the filtration media, the second end cap being open and possibly further defining the internal volume of the filter cartridge 1. The second end cap 5 is bound to the second end 22 in a sealing manner. For instance, also this end cap can be bound by plastic injection of the endcap onto the media pack 2, or it can be bonded by direct bonding, or by gluing or using a potting material. The second end cap 5 is an open end cap in the sense that it comprises a feedthrough opening for fluids, preferably air. The second end cap 5 comprises a circumferential seal 6 around the feedthrough opening, which in the example is arranged and adapted for axial sealing, i.e., for sealing towards a filter housing 10 in the axial direction. Alternatively, the seal 6 can be arranged and adapted for radially inward of outward sealing towards the filter housing 10.

The displaceable portion 32 further comprises a gripping portion 323 on its outer surface 322, allowing the exertion of an axial pulling force by at least one human adult finger, aiding the manipulating from second to first position of the displaceable portion 32.

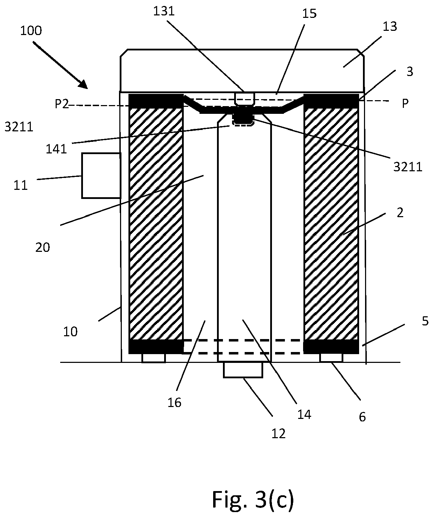

As illustrated in Fig. 3(a) (b) (c), a filter assembly comprising the disclosed filter cartridge 1, can receive the filter cartridge 1 in the housing 10 when the displaceable portion 32 is in a first ("elongate") state. The element thereby forms a seal with the housing 10 (Fig. 3(a)). Then, the displaceable portion 32 can be brought into a second ("shortened") state by pushing the displaceable portion towards the tower construction 14 and thereby deforming the deformable portion 31 in a predetermined manner. The tower construction 14 comprises a slot 141 at its distal end surface 142, which receives the rib or fin 3211 of the displaceable portion 32, a step that locks the rotation of the filter element 1 along its longitudinal axis (Fig. 3(b)). The housing 10 further comprises a housing cover 13. Preferably, the cover comprises a protrusion 131 on its lower surface (directed towards the housing internal volume) which is arranged and adapted to lock the axial movement of the displaceable portion 32 of the filter cartridge 1, by contacting the displaceable portion or by being directly adjacent to it. After installation, the tower construction 14 reaches into the inner volume 20 of the filter element 1 and extends up until a level which is below the plane P at the first end 21 of the filtration media 2. Figure 3 (c) illustrates further details of a generic filter housing 10 and air cleaner assembly 100, which has not been depicted in relation with the other embodiments for simplicity. A main filter housing 100 comprised a filter replacement opening 15 and an internal volume 16 for receiving the filter cartridge 1, which is arranged operatively in the main filter housing 10. Cover 13 closes off the main filter housing 10. The housing further comprises a fluid inlet (such as a gas, e.g. air) 11 for receiving fluid to be filtered and a fluid outlet 12 for guiding the filtered fluid out of the housing 10 after it is filtered by the media of the filter cartridge 1. A support structure/tower construction is arranged with a second end near the outlet 12 of the housing 10, preferably surrounding the outlet 12.

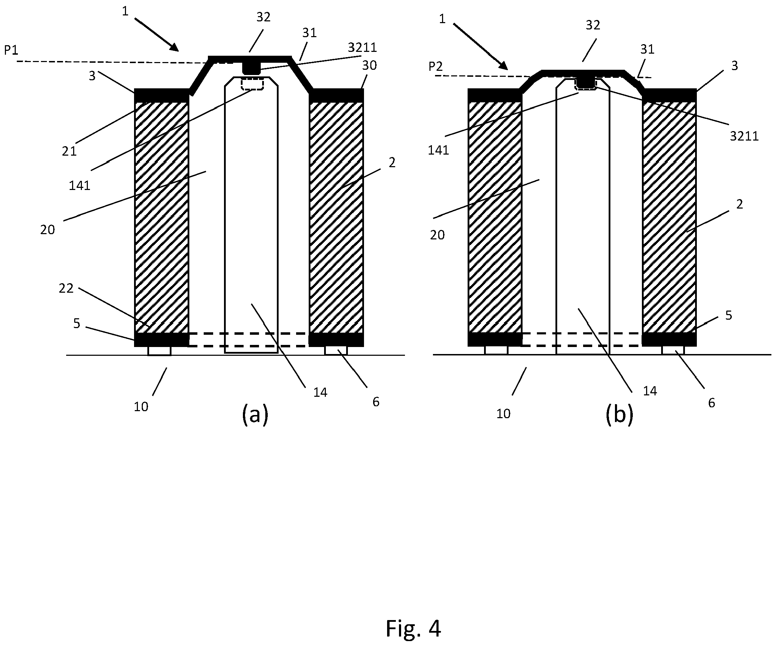

Fig. 4 (a) and (b) illustrate a second preferred embodiment of the present disclosure. This embodiment is similar to the first preferred embodiment but differs in the nature of displacement of the displaceable portion 32 between the first and second positions (P1 (Fig. 4 (a)), P2 (Fig. 4(b))). This cartridge 1 can be used in an associated filter assembly wherein the support structure/tower 114 extends up until a level which is above the plane P at the first end 21 of the filtration media 2. The displaceable portion 32 is distant from plane P on the side opposite to the side comprising the filtration media 2, when the displaceable portion 32 is in the first axial position P1. The displaceable portion 32 is distant from the plane P on the side opposite to the side comprising the filtration media 2, when said displaceable portion 32 is in said second axial position P2. The second axial position P2 is closer to the plane P than the first axial position P1.

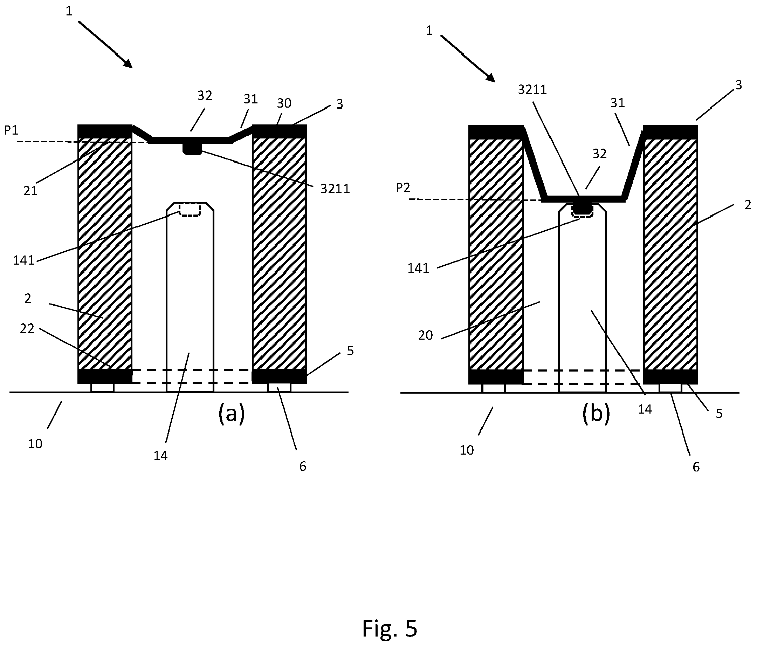

Fig. 5(a) and (b) illustrate a third preferred embodiment of the present disclosure. This embodiment is again similar to the first preferred embodiment but differs in the nature of displacement of the displaceable portion 32 between the first and second positions (P1 (Fig. 5(a)), P2 (Fig. 5(b))). The displaceable portion is distant from the plane P on the side of the filtration media when the displaceable portion is in both the first and second axial position; and the second axial position P2 is more distant from the plane P than the first axial position P1. The tower construction 114 reaches into the inner volume 20 of the filter element 1 and extends up until a level which is far below the plane P at the first end 21 of the filtration media 2.

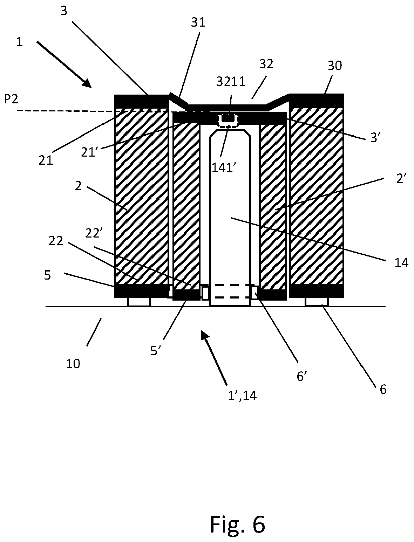

Fig. 6 illustrates an alternative arrangement applicable to any of the first to third embodiments of the present disclosure. The support structure for the filter cartridge 1 is a smaller second filter cartridge 1', the second filter cartridge 1' itself being supported in the main filter housing 10 by a support structure or tower 14. In practice, the second cartridge 1' can be a safety cartridge. It has for instance comprise a filtration media arrangement 2' arranged in a tubular configuration between a first end 21' and a second end 22'. It comprises a first, preferably closed end cap 3', and a second, preferably open, end cap 5' at the second end 22'. The end caps can be attached to the respective ends of the filtration media arrangement 2' in a manner as disclosed for the first cartridge 1. The end cap 3' comprises a second member of the projection-receiver arrangement 141' on its outer surface, for instance a recess or groove, adapted for cooperating with the fin or rib or other structure of the first member 3211 of a projection-receiver arrangement arranged on the inner surface 321 of the displaceable portion 32 of the first cartridge 1.

Here, the interaction previously described between the first member 3211 of a projection-receiver arrangement arranged on the inner surface 321 of the displaceable portion 32 and the support structure 14, 142, 141, takes place in an identical manner between the first member 3211 of a projection-receiver arrangement arranged on the inner surface 321 of the displaceable portion 32 and a second member of the projection-receiver arrangement 141' comprised or arranged on a first end cap 3' of the second cartridge 1'. The second cartridge 1' can comprises a circumferential axial or radial seal 6' on the second end cap 5', which seals against the tower 14 or against another portion of the housing 10. The second filter cartridge 1' has a rotational fixation with respect to the housing 10 or tower 14, such that the first cartridge 1' also cannot rotate about its axis within the filter housing 10.

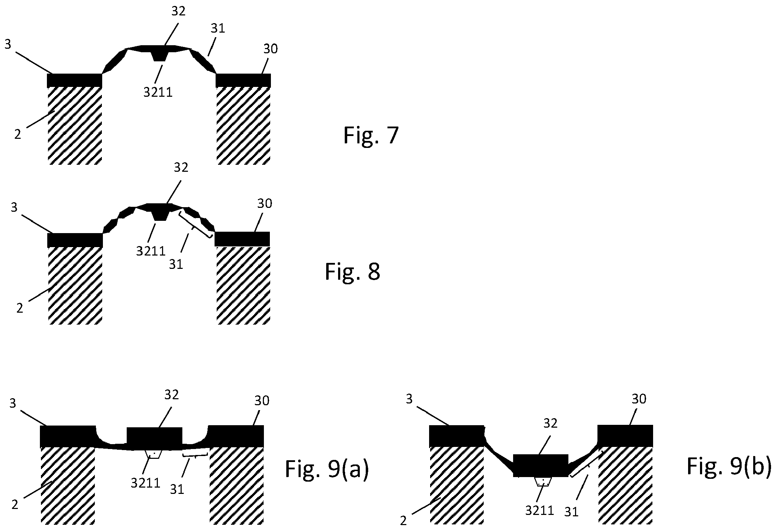

Figures 7, 8, 9(a) and (b), 10(a) and (b), 11, 12, 13 and 14 illustrate examples of configurations of the deformable portion, which can be applied to any of the embodiments of the present disclosure. All examples describe a filter cartridge 1 comprising a first end cap 3 arranged at the first end 21 of the filtration media 2, the first end cap 3 comprising a deformable portion 31 and a displaceable portion 32 surrounded by said deformable portion 31, wherein said end cap 3 is adapted for allowing a displacement of said displaceable portion 32 along said longitudinal axis between at least a first axial position and a second axial position by a deformation of said deformable portion 31. The displaceable portion 32 comprises an inner surface 321 and an outer 322 surface and a first member 3211 of a projection-receiver arrangement arranged on said inner surface 322, for example a fin or rib structure. The first end cap 3 further comprises a fixed annular portion 30 (the portion of the end cap 3 that is attached to the first axial end of the filtration media arrangement or media 2). The displaceable portion 32 preferably further comprises a gripping portion 323 on its outer surface 322, which is not depicted for simplicity of the drawings.

For instance, in Fig. 7 the first end cap (3, 30, 31, 32) is all made of, preferably hard, plastic. The deformable portion 31 forms a hinged connection with the displaceable portion 32 on one side and a hinged connection with the portion 30 of the end cap 3 that is attached to the first axial end of the filtration media arrangement or media 2 on the opposed side. The first member 3211 is also made of hard plastic.

Fig. 8 illustrates a similar example, wherein the first end cap (3, 30, 31, 32) is all made of, preferably hard, plastic, but wherein the deformable portion 31 comprises two (more generally; a plurality) of concentric rings which are connected by means of a hinge-like connection. The deformable portion 31 also forms hinge-like connections with the portion 30 of the end cap 3 that is attached to the first axial end of the filtration media arrangement or media 2 and with the displaceable portion 32.

Fig. 9(a) (b) illustrate an example wherein the first end cap (3, 30, 31, 32) is made of a preferably soft, preferably foamed, preferably applied by potting, polyurethane (PU) material. This material can stretch when having relatively low thickness, and is less or not stretchable for relatively high thickness. The portion 30 of the end cap 3 that is attached to the first axial end of the filtration media arrangement or media 2, and the displaceable portion 32 have relatively high thickness and are not deformed under typical manipulation according to the present disclosure. The deformable portion 31 is thinner and stretches under applied downward force/pressure. The first member 3211 is also made of a PU material or could be for instance a hard plastic component embedded in the PU material of the displaceable portion 32.

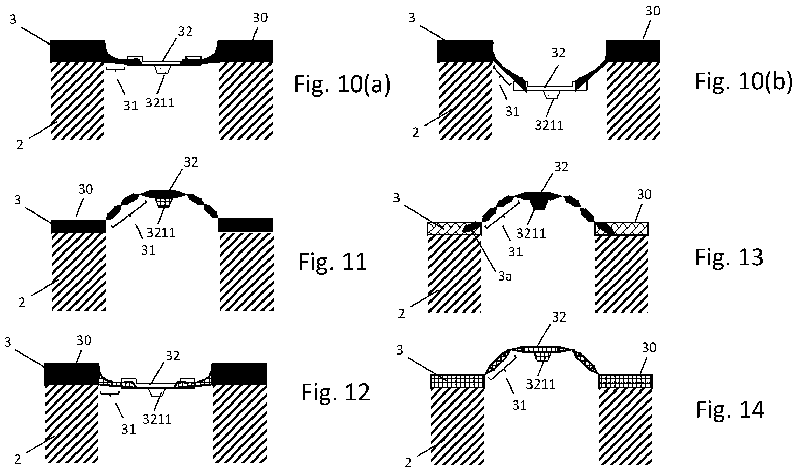

Fig. 10(a) (b) illustrate a similar example as Fig. 9(a) (b), wherein all of the displaceable portion 32, inclusive the first member 3211, are made of hard plastic and wherein the displaceable portion 32 is embedded in the PU material constituting the rest of the first end cap 3 (30, 31).

Fig. 11 illustrates an example which is similar to the example of Fig. 8, but wherein the first member 3211 comprises or is made of a thermo plastic elastomere (TPE).

Fig. 13 illustrates a further example, that is based on the configurations of Fig. 8 and Fig. 11, but wherein the fixed portion 30 comprises of consist of PU as discussed for the example of Fig. 9. The fixed portion 30 embeds an anchoring end portion 3a of the plastic deformable portion 31, for instance by overmolding of the PU over the anchoring end portion 3a of the (e.g. hard) plastic deformable portion 31. It should be understood that the anchoring end portion 3a of the deformable portion 31 does not deform, but only the complementary portion of the deformable portion 31 can deform. In another view, the anchoring end portion 3a of the deformable portion 31 is the part of the fixed annular portion 30 of the first end cap 3.

Fig. 12 illustrates a still further example. The fixed portion 30 of the first end cap and the displaceable portion 32, inclusive the first member 3211 comprise or are made of, preferably hard, plastic. The deformable portion 31 forms a stretchable connection in between the fixed portion 30 and the displaceable portion 32 and comprises or consists of TPE material, preferably stretchable TPE material. The displaceable portion is preferably embedded circumferentially by the TPE material of the deformable portion 31.

Fig. 14 illustrates another example wherein the first end cap 3 (fixed portion 30, deformable portion 31, displaceable portion 32) comprises or consists of TPE.

Alternative examples can be based on combinations of characteristics described in the previous examples for the different portions 30, 31, 32, 3211 of the first end cap 3.

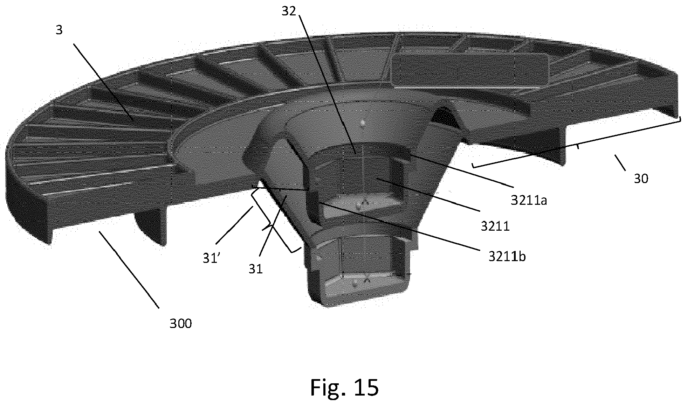

Fig. 15 illustrates a further advantageous embodiment of the present disclosure. The fixed portion 30 is adapted for being fixed to the filtration media 2 and comprises an annular slot 300 for receiving an axial end portion of a tubular filtration media 2. It preferably comprises a hard plastic material, and preferably extends radially, to a limited extent (e.g. 1, 2, 3 cm), into the inner volume 20 of the filter element 1. The deformable portion (31, 31') is depicted 'virtually' both in a first axial position and in a second axial position and comprises a flexible and/or stretchable material. The deformable portion connects the fixed portion 30 with the displaceable portion 32, which comprises the first member 3211 of the projection-receiver arrangement, protruding into the inner volume 20. In this case the displaceable portion 32 consists of the first member 3211, but this is not necessary. The first member comprises different cross-sections perpendicular on the longitudinal axis, for different axial positions. At a first axial height of the first member 3211, over a first axial portion 3211 b, positioned towards the inner surface of the displaceable portion of the end cap, the cross-section is regular polygon (hexagon). At another axial height of the first member, over a second axial portion 3211a, towards the outer portion of displaceable portion of the end cap, the cross-section is circular.

This application is intended to cover adaptations or variations of the present subject matter. It is to be understood that the above description is intended to be illustrative, and not restrictive.

What could be claimed is:
1. A filter cartridge for an air cleaner assembly, the filter cartridge comprising:
   a) a filtration media arrangement extending along a longitudinal axis between a first end and a second end and defining an internal volume of the filter cartridge; and
   b) a first end cap arranged at the first end of the filtration media and further delimiting the internal volume, the first end cap comprising a deformable portion and a displaceable portion surrounded by the deformable portion, wherein the end cap is adapted for allowing a displacement of the displaceable portion along the longitudinal axis between at least a first axial position and a second axial position by a deformation of the deformable portion;
      wherein the displaceable portion comprises an inner and an outer surface and a first member of a projection-receiver arrangement arranged on the inner surface.
2. A filter cartridge according to item 1, wherein the projection-receiver arrangement is of a type that blocks a relative rotational movement between projection and receiver.
3. A filter element according to any of the previous items, wherein the first member comprises a fin or rib or other key structure.
4. A filter cartridge according to any of the previous items, wherein the filtration media defines a plane at or adjacent to the first end of the filtration media, and the displaceable portion lies in the plane or is distant from the plane on the side opposite to the side comprising the filtration media, when the displaceable portion is in the first axial position.
5. A filter cartridge according to any of the previous items, wherein the filtration media defines a plane at or adjacent to the first end of the filtration media, and the displaceable portion lies in the plane or is distant from the plane on the side of the filtration media, when the displaceable portion is in the second axial position.
6. A filter cartridge according to any of the previous item 1 to 4, wherein the filtration media defines a plane at or adjacent to the first end of the filtration media, and the displaceable portion is distant from the plane on the side opposite to the side comprising the filtration media, when the displaceable portion is in the second axial position.
7. A filter cartridge according to any of the previous items 1 to 3, wherein
   a. the filtration media defines a plane at or adjacent to the first end of the filtration media, and the displaceable portion lies in the plane or is distant from the plane on the side of the filtration media, when the displaceable portion is in the first axial position; and
   b. the displaceable portion is distant from the plane on the side of the filtration media, when the displaceable portion is in the second axial position, the second axial position being more distant from the plane than the first axial position.
8. A filter cartridge according to any of the previous items, wherein the first endcap is made of a single material.
9. A filter cartridge according to any of the previous items, wherein the deformable portion comprises one or more folding lines or portions with reduced thickness to allow folding of the deformable portion in a predetermined manner.
10. A filter cartridge according to any of the previous items, wherein the first endcap is a closed end cap.
11. A filter cartridge according to any of the previous items, further comprising a second end cap arranged at the second end of the filtration media, the second end cap being open.
12. A filter cartridge according to item 11 wherein the second end cap comprises a circumferential seal.
13. A filter cartridge according to any of the previous items, wherein the displaceable portion comprises a gripping portion on its outer surface, allowing the exertion of an axial pulling force by at least one human adult finger.
14. A filter cartridge according to any of the previous items, wherein the deformable portion comprises two (concentric) hinge portions connected by a rigid (ring) portion.
15. A filter cartridge according to any of the previous items, wherein the deformable portion is adapted for deforming only at a predetermined axial threshold force which is higher than a force exerted by a pressure drop induced by a predetermined dust loading of the filtration media.
16. A filter assembly comprising:
   a. a main filter housing comprising a filter replacement opening and an internal volume for receiving a filter cartridge according to any of the previous items;
   b. a filter cartridge according to any of the previous items arranged operatively into the main filter housing;
   c. a cover for closing off the filter replacement opening of the main filter housing;
   d. a, preferably central, support structure for supporting the filter cartridge arranged in the main filter housing.
17. A filter assembly according to item 16, wherein the support structure comprises a tower construction.
18. A filter assembly according to item 16 or 17, wherein the support structure comprises a smaller second filter cartridge, the second filter cartridge itself being supported in the main filter housing (10).
19. A filter assembly according to any of items 16 to 18, wherein the support structure comprises a second member of the projection-receiver arrangement at an axial end thereof which is arranged within the internal volume of the filter cartridge, and wherein the projection-receiver arrangement is engaged when the displaceable portion in the second axial position and disengaged in the first axial position.
20. A filter assembly according to item 19, wherein the cover comprises a, preferably centrally arranged, inwardly protruding portion, arranged adjacent to the outer surface of the displaceable portion, to lock it into the second position, thus securing the projection-receiver arrangement.
21. A filter assembly according to any of the previous items 16 to 20, wherein an axial length of the filtration media arrangement is larger than an axial length of the support structure.
22. A filter assembly according to any of the previous items 16 to 21, wherein an axial distance between the first axial position of the displaceable element and the second end of the filtration media arrangement is larger than an axial length of the central support structure.

## Claims

1. A filter cartridge (1) for an air cleaner assembly (100), the filter cartridge (1) comprising:
a) a filtration media (2) arrangement extending along a longitudinal axis between a first end (21) and a second end (22) and defining an internal volume (20) of said filter cartridge (1); and
b) a first end cap (3) arranged at said first end (21) of said filtration media (2) and further delimiting said internal volume (20), said first end cap (3) comprising a deformable portion (31) and a displaceable portion (32) surrounded by said deformable portion (31), wherein said end cap (3) is adapted for allowing a displacement of said displaceable portion (32) along said longitudinal axis between at least a first axial position (P1) and a second axial position (P2) by a deformation of said deformable portion (31);
wherein said displaceable portion (32) comprises an inner (321) and an outer (322) surface and a first member (3211) of a projection-receiver arrangement arranged on said inner surface (322).

2. A filter cartridge according to claim 1, wherein said projection-receiver arrangement is of a type that blocks a relative rotational movement between projection and receiver.

3. A filter cartridge according to any of the previous claims, wherein said filtration media (2) defines a plane at or adjacent to said first end (21) of said filtration media (2), and said displaceable portion (32) lies in said plane or is distant from said plane on the side opposite to the side comprising said filtration media (2), when said displaceable portion (32) is in said first axial position (P1).

4. A filter cartridge according to any of the previous claims, wherein said filtration media (2) defines a plane (P) at or adjacent to said first end (21) of said filtration media (2) and said displaceable portion (32) lies in said plane or is distant from said plane on the side of said filtration media (2), when said displaceable portion (32) is in said second axial position (P2).

5. A filter cartridge according to any of the previous claim 1 to 3, wherein said filtration media (2) defines a plane (P) at or adjacent to said first end (21) of said filtration media (1) and said displaceable portion (32) is distant from said plane on the side opposite to the side comprising said filtration media, when said displaceable portion (32) is in said second axial position (P2).

6. A filter cartridge according to any of the previous claims 1 to 2, wherein
a. said filtration media (2) defines a plane (P) at or adjacent to said first end of said filtration media (2), and said displaceable portion (32) lies in said plane or is distant from said plane on the side of said filtration media (2), when said displaceable portion (32) is in said first axial position (P1); and
b. said displaceable portion (32) is distant from said plane (P) on the side of said filtration media (2), when said displaceable portion (32) is in said second axial position (P2), said second axial position (P2) being more distant from said plane than said first axial position (P1).

7. A filter cartridge according to any of the previous claims, wherein said first endcap (3) is made of a single material.

8. A filter cartridge according to any of the previous claims, wherein said deformable portion (31) comprises one or more folding lines (311) or portions with reduced thickness (312) to allow folding of said deformable portion (31) in a predetermined manner.

9. A filter cartridge according to any of the previous claims, wherein said displaceable portion (32) comprises a gripping portion (323) on its outer surface, allowing the exertion of an axial pulling force by at least one human adult finger.

10. A filter cartridge according to any of the previous claims, wherein said deformable portion (31) comprises two (concentric) hinge portions (311) connected by a rigid (ring) portion (313).

11. A filter cartridge according to any of the previous claims, wherein said deformable portion (31) is adapted for deforming only at a predetermined axial threshold force which is higher than a force exerted by a pressure drop induced by a predetermined dust loading of said filtration media (2).

12. A filter assembly (100) comprising:
a. a main filter housing (10) comprising a filter replacement opening (11) and an internal volume (12) for receiving a filter cartridge (1) according to any of the previous claims;
b. a filter cartridge (1) according to any of the previous claims arranged operatively into said main filter housing (10);
c. a cover (13) for closing off said filter replacement opening (11) of said main filter housing (10);
d. a support structure (14) for supporting said filter cartridge (1) arranged in said main filter housing (10).

13. A filter assembly according to claim 12, wherein said support structure (14) comprises a second member (141) of said projection-receiver arrangement at an axial end (142) thereof which is arranged within said internal volume (20) of said filter cartridge (1), and wherein said projection-receiver arrangement is engaged when said displaceable portion (32) in said second axial position (P2) and disengaged in said first axial position (P1).

14. A filter assembly according to claim 13, wherein said cover (13) comprises a, preferably centrally arranged, inwardly protruding portion (131), arranged adjacent to said outer surface of said displaceable portion (32), to lock it into said second position, thus securing said projection-receiver arrangement.

15. A filter assembly according to any of the previous claims 12 to 14, wherein an axial length of said filtration media (2) arrangement is larger than an axial length of said support structure (14).
